# EUROPEAN PATENT APPLICATION

(11) **EP 1 396 999 A1**
(43) Date of publication of application: **10.03.2004**
(21) Application number: 03254929.7
(22) Date of filing: 07.08.2003
(51) Int. Cl.: H04N 5/445, H04N 5/775

(54) **Method and apparatus for displaying programme related information superimposed on a video signal in a video recording/reproducing apparatus**

(30) Priority: 08.09.2002 KR 2002046948
(71) Applicant: SAMSUNG ELECTRONICS CO., LTD., Suwon-City, Kyungki-do (KR)
(72) Inventor: Lee, Ju-yup, 401-501, Seonkyeong Apartment, Seongnam-city, Gyunggi-do (KR)
(74) Representative: Geary, Stuart Lloyd

(57) **Abstract**

A video recording/reproducing apparatus 100 has a main control part 160 that, in response to a request for display of registration information for a recording medium, causes a recording media registration information guide screen to be superimposed on an image displayed on a display device (300). The recording media registration information guide screen comprises an area (433) in which registration information is displayed on a transparent background. This allows a user to view recorded images and superimposed registration information pertaining to the recorded images within the area (433) simultaneously.

## Description

The present invention relates to an apparatus for reproducing recorded images and a method of displaying images and information.

Video apparatus capable of recording and reproducing an externally received broadcast signal on a recording medium have expanded their functions in diverse ways with the development of digitisation of broadcast signals and compression technologies. Currently, video apparatus is being developed which perform all the functions of DVD (digital video disc or digital versatile disc) players, that are capable of reproducing video signals recorded on recording media such as DVDs and other mass storage devices such as hard disks. DVD is a video recording medium capable of storing high-quality movies. Further ongoing developments are aimed at producing video apparatus that support the use of diverse video sources, such as satellite broadcasts, cable broadcasts, network broadcasts through the internet, and so on.

Typically, a video apparatus provides one or more onscreen menus in order to present its functions to a user and make them convenient to use. Users can operate a remote control device, such as a remote controller, to select a desired function from a menu. The control device may include right, left, up, and down cursor keys, which enable the user to select a function.

However, the video apparatus described above has a deficiency in that, if a menu is displayed on the screen of a display device during playback of images recorded on a recording medium, the recorded images are obscured by the menu. Furthermore, the video apparatus does not provide a function capable of displaying a selected item or function in an emphasised form in order for a user to easily recognize the selected item in a displayed menu list.

According to a first aspect of the invention, a method of displaying images and information on a display comprises displaying images stored on a recording medium and, in response to a request for registration information pertaining to the stored images, superimposing registration information on the displayed images, characterised in that the superimposed registration information and images over a given area of the display are viewable simultaneously.

According to a second aspect of the invention, an apparatus for reproducing recorded images on a display of a display device comprises a reading device operable to retrieve data stored on a recording medium, a first interface configured to output video signals derived from said data to said display device, a second interface configured to receive an information request from an external access device and a processor configured to respond to said information request by outputting second video signals relating to a registration information screen, which comprises registration information pertaining to the data, for superimposition on the displayed images, characterised in that the registration information screen is configured so that, when superimposed over the displayed images, the registration information and images over a given area of the display are viewable simultaneously.

Embodiments of the present invention will now be described with reference to the drawings, in which:
Figure 1 shows a display system comprising a video apparatus according to a first embodiment of the invention;
Figure 2 is a block diagram of the video apparatus of Figure 1;
Figure 3 is a plan view of a remote controller in the display system of Figure 1;
Figure 4 depicts an example of a recording media registration information guide screen;
Figure 5 depicts an example recording media registration information guide screen according to a second embodiment of the invention;
Figure 6 shows the recording media registration information guide screen of Figure 4 following selection of a classified item;
Figure 7 shows the recording media registration information guide screen of Figure 5 following selection of a classified item; and
Figure 8 is a flow chart of a process for displaying recording media registration information according to the first embodiment.

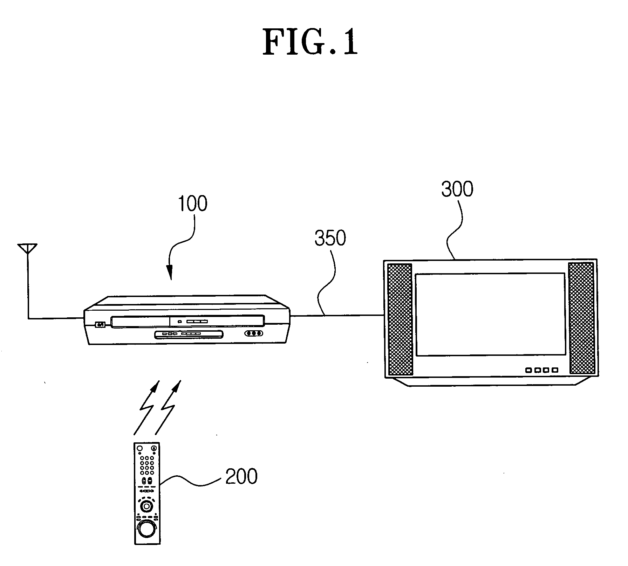

Referring to Figure 1, a video apparatus 100 is connected to a television set 300 through a transmission cable 350. The video apparatus 100 processes a signal received from an external input device and transmits display information to the television set 300. The external input device may be a remote controller 200, which transmits a wireless signal, e.g. using infrared radiation, or another input device such as a wire-type keyboard.

The video apparatus 100 can be arranged to receive video signals provided from one or more video sources, for example, terrestrial television broadcasts, satellite broadcasts, cable broadcasts, computer lines or modem lines. In this particular embodiment, the video apparatus 100 is arranged to receive one or more video signals from video sources such as cables, satellite dishes, local cables, digital broadcast sources (DBSs), general antennas, internet, other computer sources, camcorders, disc players, set-top boxes and so on.

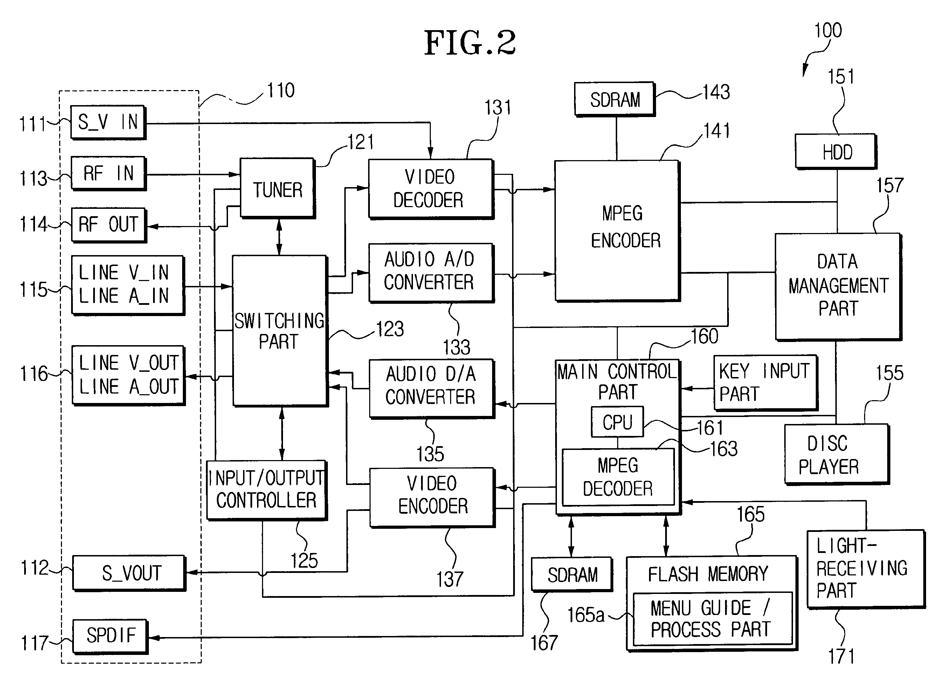

Figure 2 is a block diagram of the video apparatus 100 shown in Figure 1. The apparatus 100 has an input/output port 110, a tuner 121, a switching part 123, an input/output controller 125, an MPEG encoder 141, a hard disk drive (HDD) 151, a disc player 155, and a main control part 160.

The input/output port 110 can receive signals from diverse video signal sources, and also outputs signals or signals reproduced from the hard disk drive 151, which is employed as a mass storage device. The input/output port 110 is provided with a super video input port (S_V IN) 111, a super video output port (S_Vout) 112, an RF input port (RF IN) 113, an RF output port (RF OUT) 114, a line video/audio input port (LINE V_IN, LINE A_IN) 115, a line video/audio output port (LINE V_OUT, LINE A_OUT) 116, and a serial parallel digital interface (SPDIF) 117. The input and output ports will now be described in detail, with information regarding ports having different input and output relationships but identical signal formats.

The super video input port 111 is a port for receiving a luminance signal Y and chrominance signals Cr and Cb in a digital format, which are separate from each other and used in connection with a digital camcorder, a DVD player, a set-top box, and other similar devices.

The RF input port 113 is a port for receiving an air broadcast signal, which is generally connected to an antenna.

The line video/audio input port 115 is a port for receiving an analogue signal mixed with a luminance signal Y and chrominance signals. Port 115 is used in connection with a camcorder, a DVD player, a set-top box and other devices, which provide analogue video signals.

The digital audio output port 117 is a port for externally transmitting a digital audio signal output by the main control part 160.

The tuner 121 tunes to a reception channel so that a broadcast signal on a channel requested from the input and output controller 125, as controlled by the main control part 160, can be received through the RF input port 113.

The switching part 123 is controlled by the input/output controller 125 to selectively connect the input and output ports to each other.

A video decoder 131 is controlled by the main control part 160 to decode and output a signal received through the super video input port 111 or the switching part 123.

An audio A/D converter 133 converts an analogue audio signal input through the switching part 123 into a digital signal, and outputs the digital signal to the MPEG encoder 141.

The MPEG encoder 141 is controlled by the main control part 160 to encode an audio signal output from the audio A/D converter 133 and a video signal output from the video decoder 131 in a known compression format and stores data in the hard disk drive 151. In this particular example, the encoding performed by the MPEG encoder 141 is based on the MPEG-2 compression format.

An SDRAM 173 is employed as a memory for use during the encoding process carried out by the MPEG encoder 141.

A data management part 157 manages the reproduction and recording of data stored in the hard disk drive 151 and/or the disc player 155. The data management part 157 is controlled by the main control part 160 to manage the storage of the data recorded in the disc player 155 in the hard disk drive 151, the storage of data stored in the hard disk drive 151 in the disc player 155 or the storage of the data encoded in the MPEG encoder 141 in the hard disk drive 151.

The disc player 155 is a component of the video apparatus 100. The disc player 155 may be a DVD player for reproducing data stored in a recording medium such as a DVD or a compact disc (CD). The disc player 155 can be connected to, and controlled by, the main control part 160, in order to perform recording and/or reproducing operations.

A light-receiving part 171 is a user interface, which receives and outputs to the main control part 160 a user manipulation signal from an external input device, such as the remote controller 200.

The main control part 160 processes the user manipulation signal received via the light-receiving part 171 and controls the respective parts of the apparatus 100. The main control part 160 is formed of a single IC chip combining a central processing unit (CPU) 161 and an MPEG decoder 163. MPEG decoder 163 is used to decode signals compressed in the MPEG format. The MPEG decoder 163 may be provided as a separate chip, connected to the main control part 160.

A flash memory 165 stores various programs relating to the performance and functions of the main control part 160. The flash memory 165 is equipped with a menu guide/process part 165a, which is a software module for carrying out a process for producing a recording media registration guide screen, as described in detail below. An SDRAM 167 is used by the main control part 160 for temporary storage of data.

The audio D/A converter 135 converts a digital audio signal output from the MPEG decoder 163 of the main control part 160 into an analogue audio signal, and outputs the analogue audio signal to the switching part 123.

A video encoder 137 encodes video signals output from the video decoder 131 and the MPEG decoder 163, and outputs the decoded video signals to the switching part 123.

When the video apparatus 100 is switched on, the main control part 160 loads operating programs from the flash memory 165. The main control part 160 then performs processes relating to various support functions, corresponding to signals received from the remote controller 200 via the light-receiving part 171. The control process of the main control part 160 is based on key selections from the remote controller 200. This will now be described in connection with processing information for displaying a recording media registration information guide screen.

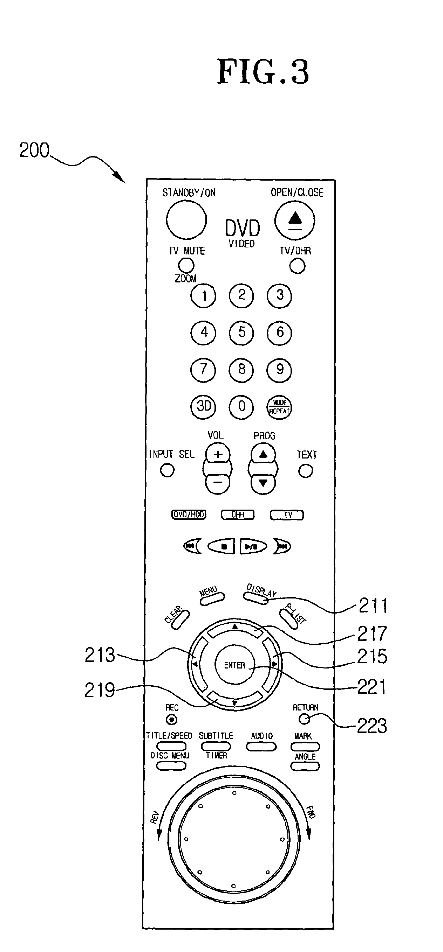

Referring now to Figure 3, the display and manipulation of a recording media registration information guide screen will now be described.

In the following example, the external input device for the video apparatus 100 is a remote controller 200, as shown in Figure 1. Reference number 211 denotes a display key used when loading and closing a recording media registration information guide screen. Reference numbers 217, 219, 213 and 215 denote up, down, left, and right direction keys respectively, which are employed for cursor movements with respect to classified items listed on the recording media registration information screen. Enter key 221 is used when selecting menus, and return key 223 is used when returning from a current screen to a previous screen. The rest of the keys are well-known keys and specific keys for manipulating the video apparatus 100 and the television set 300, the functions of which can be easily understood from labels corresponding to the keys, as shown in Figure 3. Detailed descriptions of the functions of the keys will be omitted, as their function and use is well known to a skilled reader.

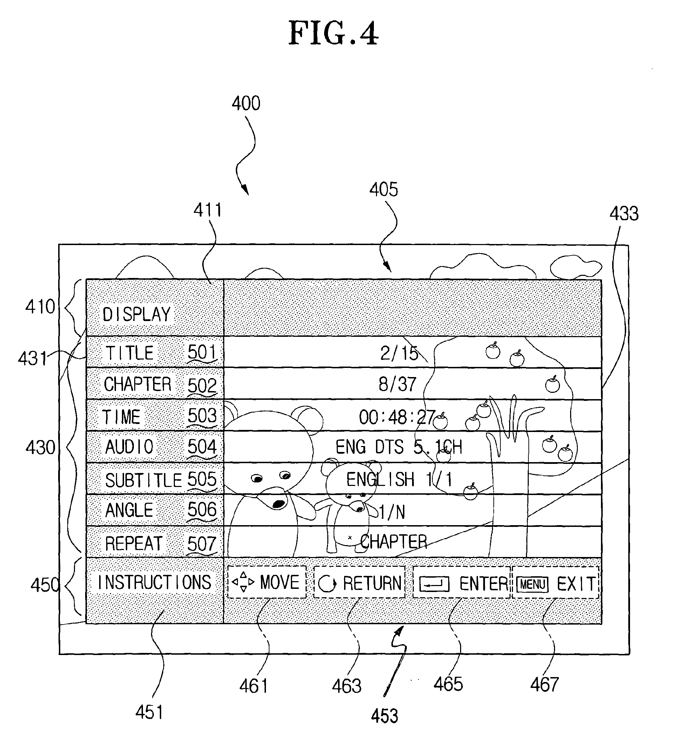

When the display key 211 of the remote controller 200 is selected, the main control part 160 launches a program of the menu guide/process part 165a to display a recording media registration information guide screen on the television set 300, via the output port connected to the television 300, e.g., line video/audio output port 116. An example recording media registration information guide screen is shown in Figure 4.

The recording media registration information guide screen 405 of Figure 4 is horizontally divided into three areas: an upper area 410, a middle area 430 and a lower area 450. The upper area 410 is vertically divided into two blocks. The label "DISPLAY" is placed in the left block 411 of the upper area 410.

The middle area 430 is also vertically divided into two blocks. A first block 431 is located on the left side, and a second block 433 is located on the right side. The first block 431 of the middle area 430 shows a list of items relating to registration information of a recording medium, such as a DVD. The second block 433 of the middle area 430 has recording media registration information corresponding to the classified items of first block 431. For example, an item "Title" 501 indicates the title of a movie or an animation stored in a DVD, which is displayed in the area of the second block 433 corresponding to Title item 501. In the event that the DVD stores a plurality of movies or animations, this area of the second block 433 displays information regarding a title selected from the plurality of titles.

The item "Chapter" 502 indicates chapter information about the DVD title shown in Title item 501. A movie or animation stored on a DVD can be divided into one or more chapters. Accordingly, the corresponding area of the second block 433 displays chapter information selected from the plurality of chapters in a selected title.

The item "Time" 503 indicates a DVD reproduction period of time. The corresponding area of the second block 433 shows information about the image currently displayed, in terms of an elapsed time. For example, the elapsed time may be measured with respect to the beginning of the movie or animation, the beginning of the current chapter etc.

The item "Audio" 504 indicates the type of audio data for the plurality of titles recorded on the DVD. The corresponding area of the second block 433 shows information on an audio data type selected from a plurality of audio data sets, which may comprise soundtracks in various languages.

The item "Subtitle" 505 indicates caption data of movies or television broadcasts. The corresponding area of the second block 433 displays language information relating to caption data currently displayed.

The item "Angle" 506 indicates angle information about each chapter of the DVD. The area of the second block 433 for showing information corresponding to the Angle item 506 displays angle information on a selected angle from angle information obtained when photographing at various angles. In general, in a DVD, video data obtained by filming a scene using more than one camera angle or direction, is recorded as angle data. This allows a user to view images photographed at a desired angle according to his or her preferences.

The item "Repeat" 507 is an item for setting a chapter or a title repeat mode. The corresponding area of the second block 433 displays information corresponding to a selected mode of chapter and title repeat modes.

As discussed above, when the display key 211 of the remote controller 200 is selected, the main control part 160 displays a recording media registration information guide screen 405 on a predetermined portion of the television set 300. The main control part 160 detects registration information recorded on a DVD inserted in the disc player 155 when a selection signal of the display key 211 is received through the light-receiving part 171 and provides the information through the DVD registration information guide screen 405.

In this embodiment, the main control part 160 processes the second block 433 of the middle area 430, with the exception of the information itself, to be transparent when the recording media registration information guide screen 405 is displayed on the screen 400 of the television set 300, the second block 433 overlapping an image displayed on the screen 400 of the television set 300. This allows the second block 433 and the image to be displayed simultaneously. Therefore, a user can view and check registration information recorded on a DVD while viewing the reproduced images displayed on the screen 400 of the television set 300. The main control part 160 processes the first blocks 431 of the upper area 410, lower area 450, and middle area 430 to be opaque when the recording media registration information guide screen 405 is displayed, so that a user can conveniently navigate through the recording media registration information guide screen and make selections as required. In Figure 4, dotted shading is used to distinguish the opaque areas 410, 450, and 431 from transparent areas on the recording media registration information guide screen 405.

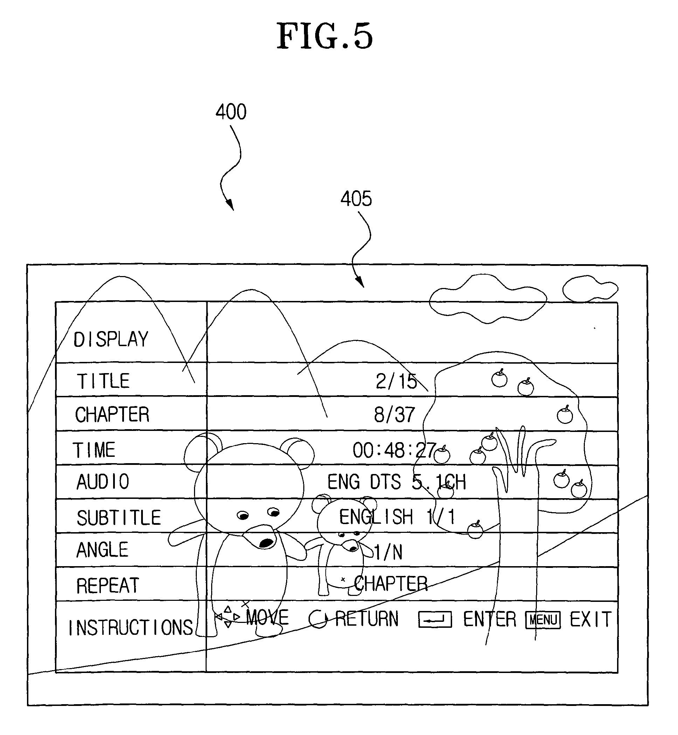

In a second embodiment of the invention, the main control part 160 can process the entire recording media registration information guide screen 405 to be transparent, with the exception of the text denoting the classified items and information. The guide screen 405 can then overlap and be displayed simultaneously with an image on the screen 400 of the television set 300, as shown in Figure 5, so that a user can check information on the images being currently reproduced.

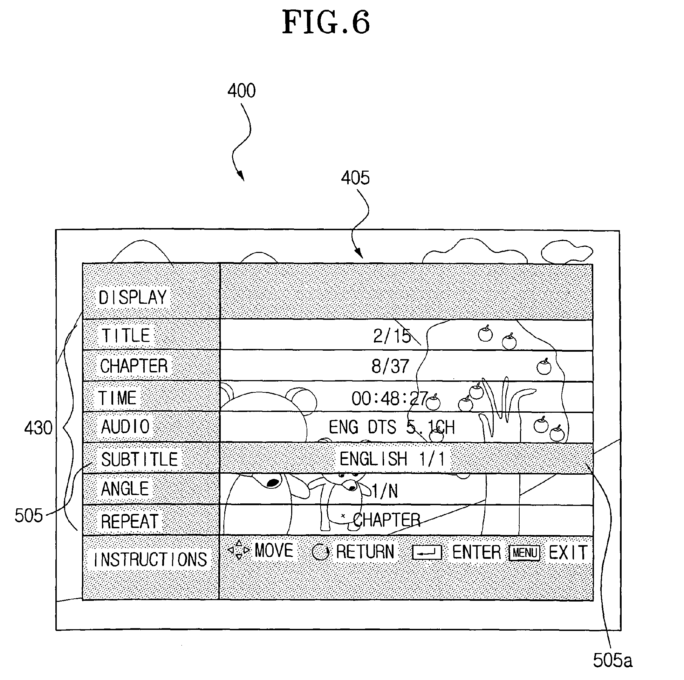

In the first embodiment of the invention, where the recording media registration information guide screen 405 with a transparent second block 433 is output as shown in Figure 4, if a user selects an item from the list of classified items displayed in the first block 431, the corresponding information in the second block 433 is displayed in an emphasised form as follows. For example, if a user selects the Subtitle item 505, the main control part 160 outputs an opaque area 505a in which information corresponding to the Subtitle item 505 is displayed, as shown in Figure 6. Parts of the images that coincide with the opaque area 505a are concealed. The main control part 160 further emphasises the selected item using highlighted characters.

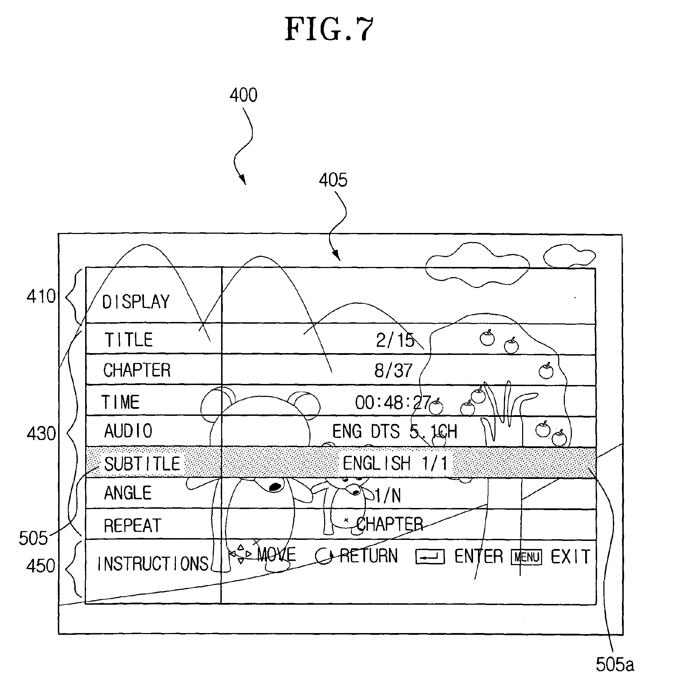

In the second embodiment, as shown in Figure 5, where the entire recording media registration information guide screen 405 is transparent, if a user selects the Subtitle item 505 from the classified items displayed in the first block 431, the main control part 160 causes the area 505a in which information corresponding to the Subtitle item 505 is displayed to be opaque, as shown in Figure 7, so that parts of the images underlying area 505a are not seen.

Referring again to Figure 4, the lower area 450 displays information regarding the functions of the keys of the remote controller 200 when the recording media registration information guide screen 405 is in use. The lower area 450 has the word "Instructions" displayed in its first block 451, wherein the lower area 450 is divided so that the first block 451 is vertically aligned with the first blocks 411 and 431 of the upper area 410 and the middle area 430. A second block 453 to the right of the first block 451 displays guide information corresponding to the keys provided on the remote controller 200 and their functions. Marks and guide information displayed on the lower area 450 are hereinafter referred to as "marks" in general and identified as a cursor movement guide mark 461, a return guide mark 463, a selection guide mark 465 and an exit guide mark 467.

The cursor movement guide mark 461 is used to move the cursor to the items arranged in the middle area 430. The cursor movement guide mark 401 corresponds to the direction keys 213, 215, 217 and 219 provided on the remote controller 200. The user can move the cursor from an item at which it is currently positioned to a next item in accordance with the direction keys 213, 215, 217 and 219 pressed by the user. Accordingly, a user can manipulate the up, down, left, and right direction keys 217, 219, 213, and 215 provided on the remote controller 200 when he or she wants to move the cursor to the items displayed in the middle area 430. The item corresponding to the cursor position can be indicated using various properties such as extra marks, highlighting, shading, colour changes and so on.

The return guide mark 463 is used when a user wants to display a previously displayed screen in place of a current screen 405. The return guide mark 463 corresponds to the return key 223 provided on the remote controller.

The selection guide mark 465 is used when an item on which the cursor is positioned is selected. The selection guide mark 465 corresponds to the enter key 221 provided on the remote controller 200.

The exit guide mark 467 is used when a user wants to change a display mode of the recording media registration information guide screen 405 to another mode. For example, a user can close the recording media registration information guide screen 405 through manipulation of exit guide mark 467.

The information shown in the first blocks 431 of the upper area 410, middle area 430 and lower area 450 of the recording media registration information guide screen 405 is fixed. Only the information displayed in the second block 433 of the middle area 430 is changed, according to the registration information of each recording medium.

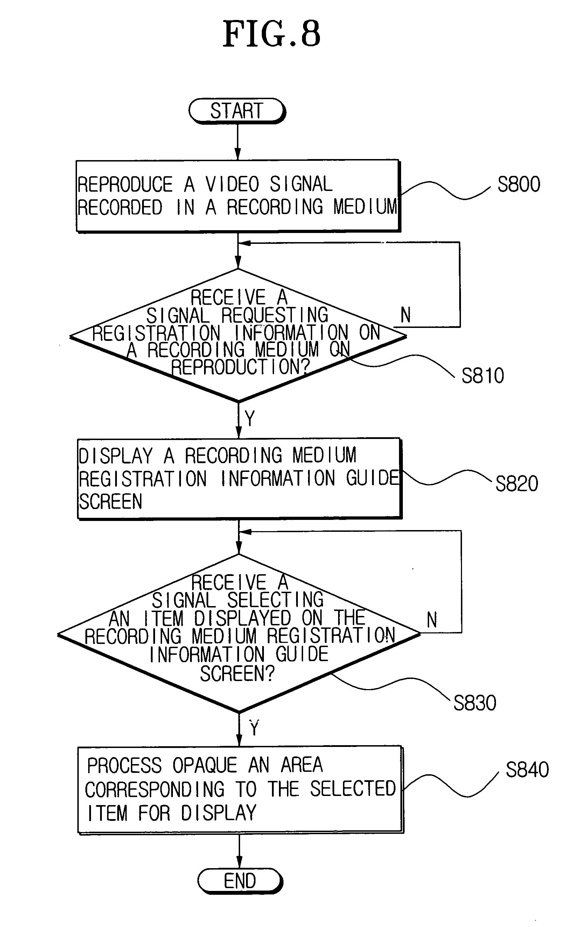

Hereinafter, a method for displaying recording media registration information for a video apparatus 100 according to the first embodiment of the present invention is described with reference to Figure 8.

If the main control part 160 receives a key signal for reproducing images stored on a recording medium through the light-receiving part 171, the main control part 160 reproduces a video signal recorded on the recording medium installed in the disc player 155 (step S800).

The main control part 160 determines whether a request signal for the recording media registration information guide screen 405 is received from the remote controller 200, while displaying a video signal recorded on the recording medium on the screen 400 of the television set 300 (step S810).

If it is determined that a request signal for the recording media registration information guide screen 405 is received ("Yes" path from decision step S810), the main control part 160 displays the recording media registration information guide screen 405 on the screen 400 of the television set 300 (step S820). At the same time, the main control part 160 processes a transparent area displaying registration information of the recording medium corresponding to an item classified on the recording media registration information guide screen 405, so that the transparent area overlaps, and is displayed simultaneously with, the reproduced images.

The main control part 160 then determines whether a key signal corresponding to the selection of any one of the items classified on the recording media registration information guide screen 405 displayed on the screen 400 is received from the remote controller 200 (step S830). If it is determined that a user has selected any of the classified items using the remote controller 200 ("Yes" path from decision step S830), the main control part 160 processes an area corresponding to the selected item to be opaque, and displays the opaque area so that parts of the reproducing images coinciding with the opaque area are not seen (step S840). At this time, the main control part 160 causes the letters denoting the selected item to be highlighted when displayed in order to distinguish the selected item from the other items shown.

The embodiments of the invention described above utilise a recording medium, such as a DVD, which provides registration information on images. However, a display process as described above can be applied to broadcast signals in order to provide information such as image titles, reproduction times and so on.

In the video apparatus 100 and recording media registration information display method described above, registration information stored on a recording medium is displayed in a display format, while the recorded images are reproduced. The registration information is based on classified items and a selected item is emphasised so that it is distinct. The embodiments of the present invention enable a user to check images reproduced from a recording medium while displaying registration information stored in the recording medium, reducing inconvenience to the user.

While the invention has been shown and described with reference to certain embodiments thereof, it will be understood by those skilled in the art that various changes in form and details may be made therein without departing from the scope of the invention as defined by the appended claims.

## Claims

**1.** A method of displaying images and information on a display (400), comprising:
displaying images stored on a recording medium; and
in response to a request for registration information pertaining to the stored images, superimposing the registration information on the displayed images;
**characterised in that**:
the superimposed registration information and images over a given area (433) of the display (400) are viewable simultaneously.

**2.** A method according to claim 1, wherein the registration information pertains to one or more recorded programmes stored on the recording medium.

**3.** A method according to claim 1 or 2, wherein the step of displaying the registration information comprises;
displaying one or more classifications of registration information in a second area (430) of the display (400); and
displaying registration information corresponding to said one or more classifications in the given area (433).

**4.** A method according to claim 3, further comprising:
determining whether a user has selected a classification (505) of registration information displayed in the second area (430); and
in response to a positive determination, presenting registration information corresponding to the selected classification (505) in an opaque area (505a) within the given area (433).

**5.** An apparatus (100) for reproducing recorded images on a display (400) of a display device (300), comprising:
a reading device (151, 155) operable to retrieve data stored on a recording medium;
a first interface (110) configured to output video signals derived from said data to said display device (300);
a second interface (171) configured to receive an information request from an external access device (200); and
a processor (160) configured to respond to an information request by outputting second video signals relating to a registration information screen, which comprises registration information pertaining to the data, for superimposition on the displayed images;
**characterised in that**:
the registration information screen is configured so that, when superimposed over the displayed images, the registration information and images over a given area (433) of the display (400) are viewable simultaneously.

**7.** An apparatus (100) according to claim 5, wherein the registration information pertains to one or more recorded programmes stored on the recording medium.

**8.** An apparatus (100) according to claim 6 or 7, wherein:
one or more classifications of registration information are displayed in a second area (430) of the display (400); and
registration information corresponding to said one or more classifications is displayed in the given area (433).

**9.** An apparatus (100) according to claim 8, further operable to:
determine whether a user has selected a classification (505) of registration information displayed in the second area (430); and
in response to a positive determination, configure the data signals so that the registration information corresponding to the selected classification (505) is presented in an opaque area (505a) within the given area (433).

**10.** A method for displaying registration information pertaining to recorded programs stored on a recording medium used in a video recording/reproducing apparatus, comprising:
receiving a request signal from an external access device requesting registration information pertaining to the recorded programs stored on the recording medium;
providing the requested registration information pertaining to the recorded programs stored on the recording medium to a screen associated with the video recording/reproducing apparatus; and
displaying the requested registration information on the screen associated with the video recording/reproducing apparatus in an area on the display, the area on the display being divided into a first and second area, wherein the first area displays classifications of registration information, and the second area displays registration information of the classification of registration information, the second area being semitransparent and overlapping a displayed video signal.

**11.** The method according to claim 10, wherein the first area is opaque.

**12.** The method according to claim 10, wherein the first area is semitransparent and overlaps a displayed video signal.

**13.** The method according to claim 10, further comprising:
selecting a classification of registration information displayed in the first area; and
displaying the registration information corresponding to the selected classification of registration information as an opaque portion in the second area.

**14.** The method according to claim 10, wherein the external access device is a remote control unit.

**15.** The method according to claim 10, wherein the first area of classifications of registration information comprises one or more classifications.

**16.** The method according to claim 15, wherein the one or more classifications comprises:
a first, second, third, fourth, fifth sixth and seventh items corresponding to the movie or animation stored in the stored on the recording medium used in a video recording/reproducing apparatus.

**17.** The method according to claim 16, wherein the first item comprises:
a title of a movie or animation stored on the recording medium used in a video recording/reproducing apparatus.

**18.** The method according to claim 16, wherein the second item comprises:
chapter information stored on the recording medium used in a video recording/reproducing apparatus which corresponds to the title information of the first item.

**19.** The method according to claim 16, wherein the third item comprises:
reproduction time of the recording medium used in a video recording/reproducing apparatus.

**20.** The method according to claim 16, wherein the fourth item comprises:
audio data which indicates the type of audio data for the plurality of title that can be stored on the recording medium used in a video recording/reproducing apparatus.

**21.** The method according to claim 16, wherein the fifth item comprises:
caption data stored on the recording medium used in a video recording/reproducing apparatus which corresponds to the title information of the first item.

**22.** The method according to claim 16, wherein the sixth item comprises:
angle information stored on the recording medium used in a video recording/reproducing apparatus which corresponds to the title information of the first item.

**23.** The method according to claim 16, wherein the seventh item comprises:
repeat mode information stored on the recording medium used in a video recording/reproducing apparatus which corresponds to the title information of the first item and the chapter information of the second item.

**24.** An apparatus for displaying registration information pertaining to recorded programs stored on a recording medium used in a video recording/reproducing apparatus, comprising:
an external access device to provide a request for registration information pertaining to the recorded programs stored on the recording medium to the video recording/reproducing apparatus;
a display associated with the video recording/reproducing apparatus to display requested registration information pertaining to the recorded programs stored on the recording medium, as well as recorded programs stored on the recording medium; and
an area on the display to display the requested registration information pertaining to the recorded programs stored on the recording medium, the area being divided into a first and second area, wherein the first area displays classifications of registration information, and the second area displays registration information of the classification of registration information, the second area being semitransparent and overlapping a displayed video signal.

**25.** The apparatus according to claim 24, wherein the first area is opaque.

**26.** The apparatus according to claim 24, wherein the first area is semitransparent and overlaps a displayed video signal.

**27.** The apparatus according to claim 24, wherein the area on the display to display the requested registration information pertaining to the recorded programs stored on the recording medium, further comprises:
the first area contains a classification of registration information that can be selected; and
the second area contains registration information corresponding to the selected classification of registration information as an opaque portion.

**28.** The apparatus according to claim 24, wherein the external access device is a remote control unit.

**29.** The apparatus according to claim 24, wherein the first area of classifications of registration information comprises one or more classifications.

**30.** The apparatus according to claim 29, wherein the one or more classifications comprises:
a first, second, third, fourth, fifth sixth and seventh items corresponding to the movie or animation stored in the stored on the recording medium used in a video recording/reproducing apparatus.

**31.** The apparatus according to claim 30, wherein the first item comprises:
a title of a movie or animation stored on the recording medium used in a video recording/reproducing apparatus.

**32.** The apparatus according to claim 30, wherein the second item comprises:
chapter information stored on the recording medium used in a video recording/reproducing apparatus which corresponds to the title information of the first item.

**33.** The apparatus according to claim 30, wherein the third item comprises:
reproduction time of the recording medium used in a video recording/reproducing apparatus.

**34.** The apparatus according to claim 30, wherein the fourth item comprises:
audio data which indicates the type of audio data for the plurality of title that can be stored on the recording medium used in a video recording/reproducing apparatus.

**35.** The apparatus according to claim 30, wherein the fifth item comprises:
caption data stored on the recording medium used in a video recording/reproducing apparatus which corresponds to the title information of the first item.

**36.** The apparatus according to claim 30, wherein the sixth item comprises:
angle information stored on the recording medium used in a video recording/reproducing apparatus which corresponds to the title information of the first item.

**37.** The apparatus according to claim 30, wherein the seventh item comprises:
repeat mode information stored on the recording medium used in a video recording/reproducing apparatus which corresponds to the title information of the first item and the chapter information of the second item.
